Europäisches Patentamt

European Patent Office

Office européen des brevets

(11) Publication number: **0 518 406 B1**

## EUROPEAN PATENT SPECIFICATION

(45) Date of publication of patent specification: **22.11.95**

(51) Int. Cl.⁶: **C08F 218/10**, C08F 210/00, C08F 218/08

(21) Application number: **92201508.6**

(22) Date of filing: **26.05.92**

(54) **Polymer dispersions from vinyl pivalate, vinyl acetate and alkylene.**

(30) Priority: **29.05.91 GB 9111496**

(43) Date of publication of application:
**16.12.92 Bulletin 92/51**

(45) Publication of the grant of the patent:
**22.11.95 Bulletin 95/47**

(84) Designated Contracting States:
**BE CH DE ES FR GB IT LI NL SE**

(56) References cited:
**EP-A- 0 295 727**
**EP-A- 0 315 278**
**GB-A- 1 144 316**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Sonderman, Marc Stephen**
**Avenue Jean Monnet 1**
**B-1348 Ottignies Louvain-La-Neuve (BE)**
Inventor: **Scholten, Henricus**
**Avenue Jean Monnet 1**
**B-1348 Ottignies Louvain-La-Neuve (BE)**

Rank Xerox (UK) Business Services
(3.10/3.09/3.3.3)

**Description**

The invention relates to polymers of vinyl ester of pivalic acid, vinyl acetate and alkylene, to aqueous dispersions containing such polymers, to a process for the preparation of such polymers, to coating compositions comprising such dispersions and to solid polymers formed by physical drying of latices or coatings.

More particularly the invention relates to polymers of vinyl pivalate, vinyl acetate and alkylene (alkene) such as ethylene (ethene) and/or propylene, obtainable by an aqueous emulsion polymerisation of the vinyl pivalate and vinyl acetate under an alkylene atmosphere under pressure.

From European patent application No. 295,727 a latex and a process for its preparation were known. This latex comprised 25-65% by weight (of the latex) of a polymer of (a) vinyl acetate, (b) ethylene and (c) the vinyl ester of a tertiary aliphatic carboxylic acid in which the acid moiety contains 9 carbon atoms, the glass transition temperature of the homopolymer of component (c), as measured by differential scanning calorimetry, being in the range of from 20 to 120 °C, wherein the weight ratios of the constituents of the polymer are in the ranges:

100 parts (a) : 5 - 50 parts (b);
100 parts (a) : 5 -120 parts (c); and
100 parts (b) : 50-500 parts (c).

The process for the preparation of this latex comprised the reaction of an aqueous dispersion of vinyl acetate, the vinyl ester of a tertiary aliphatic carboxylic acid, having an acid moiety of 9 carbon atoms, one or more stabilisers, one or more buffering agents and one or more polymerisation initiators, with ethylene at elevated temperature (40-100 °C) and at a pressure in the range of from 1 to 7 MPa (10-70 bar).

However, this disclosed process showed as a clear disadvantage in that heavy foaming occurred which necessitated an additional laborious and prudential operation, which in turn was cost-increasing.

From British patent No. 1,569,637 a process was known for the preparation of a dispersion powder dispersible in water and suitable as binding agent for synthetic resin bound plasters. This process comprised the emulsion polymerisation of vinyl acetate with one or more olefinically unsaturated monomers such as vinyl esters of straight chained and branched carboxylic acids having 3 to 18 carbon atoms, acrylic, methacrylic, maleic and fumaric acid esters of aliphatic alcohols having 1 to 18 carbon atoms, vinyl chloride, ethylene, iso-butylene and higher olefins having 4 to 12 carbon atoms.

However, said emulsion polymerisation was carried out in the presence of an emulsifier/colloid system, which was composed of ionic and non-ionic emulsifiers and at least one polyvinyl alcohol as protective colloid.

As indicated hereinafter it has been experienced that coating compositions, derived from polymers prepared from alkylene, and in particular ethylene, a primary aliphatic monocarboxylic acid vinyl ester, in the presence of a protective colloid, do not show attractive properties. Therefore, there was still a need for polymer compositions, which can provide to coating compositions the attractive properties aimed at and which can be prepared by a simple and efficient process.

As a result of extensive research and experimentation such polymers aimed at could surprisingly be obtained.

Accordingly, the invention is relating to an polymer of (a) alkylene, preferably ethylene, (b) vinyl acetate and (c) vinyl pivalate, the glass transition temperature of whose homopolymer, as measured by differential scanning calorimetry, being in the range of from 70-80 °C, preferably from 70 to 75 °C, and (d) a stabilising monomer, selected from the group consisting of acrylic acid, methacrylic acid, acrylamide, methacrylamide, diacetone acrylamide and sodium vinyl sulphonate or mixtures thereof, of which acrylic acid or methacrylic acid are preferred, in an amount of from 0.5 to 5% by weight relative to the total weight of monomers, characterised by the respective weight percentages $x_1$, $x_2$ and $x_3$ of the components (a), (b) and (c), being calculated relative to the total weight of the sum of the amounts of these components, being defined by the ranges:

$x_1$ is in the range of from 1 to 41% by weight;
$x_2$ is in the range of from 44 to 84% by weight; and
$x_3$ is in the range of from 15 to 55% by weight.

It will be appreciated that the starting vinyl pivalate may be a single chemical compound. However, as a consequence of the preparation of such products, it will more commonly be a mixture of the main monomer with a minor amount of impurities in the form of homologues. Therefore the definition "vinyl pivalate, the glass transition temperature of whose homopolymer, as measured by differential scanning calorimetry, is in the range of from 70 °C to 80 °C and preferably from 70 °C to 75 °C" includes products containing a major quantity, suitably 90% or more, of the main compound and a minor quantity for example up to about 10%, of further compounds, preferably less than 5% of such compounds.

The definitions as given above for the glass transition temperature of the homopolymer of (c) relate to the component (c) with any such accompanying compounds, hence the deviation from 72 °C, the glass transition temperature of pure poly(vinyl pivalate).

A preferred component (c) is VeoVa 5 ("VeoVa" is a trade mark), which is mainly consisting of the vinyl ester of pivalic acid and of only a small amount (5% or less) of close homologues.

The polymers according to the present invention show, as compared to the prior art polymers derived from vinyl esters of branched carboxylic acids containing 9 carbon atoms such as VeoVa 9, a more efficient rigidification, a higher monomer conversion which causes a lower free monomer content and in connection therewith less unattractive odour, and a lower water absorption.

According to a more preferred embodiment of the present invention, polymers are provided, wherein the respective weight percentages $x_1$, $x_2$ and $x_3$ of components (a), (b) and (c), being calculated relative to the total weight of the sum of the amounts of these components, are simultaneously fulfilling the following equations each describing compositions having equal performance contour lines in a triangle diagram:

$$T_g = -14.608x_1 + 40.557x_2 + 43.960x_3 - 52.011x_1.x_2 - 58.558x_1.x_3 + 30.802x_2.x_3 \qquad \text{I}$$
$$WA = +810.34x_1 + 118.49x_2 - 54.07x_3 + 331.64x_1.x_2 - 516.62x_1.x_3 - 85.08x_2.x_3 \qquad \text{II}$$
$$CONV = +98.94x_1 + 100.11x_2 + 101.08x_3 + 0.05x_1.x_2 - 3.25x_1.x_3 - 3.69x_2.x_3 \qquad \text{III}$$
$$WS = +4.462x_1 + 0.989x_2 + 2.780x_3 + 8.163x_1.x_2 + 10.113x_1.x_3 + 7.238x_2.x_3 \qquad \text{IV}$$

wherein $T_g$ represents the glass transition temperature and has a value in the range from 10 to 40 °C, wherein WA represents the water absorption and has a value of at most 150%, wherein CONV represents the monomer conversion at the conditions of the examples and has a value of at least 99.2%, wherein WS represents the water spot resistance and has a value of at least 7 and wherein the stabilising monomer is acrylic acid in a concentration of 0.5% by weight.

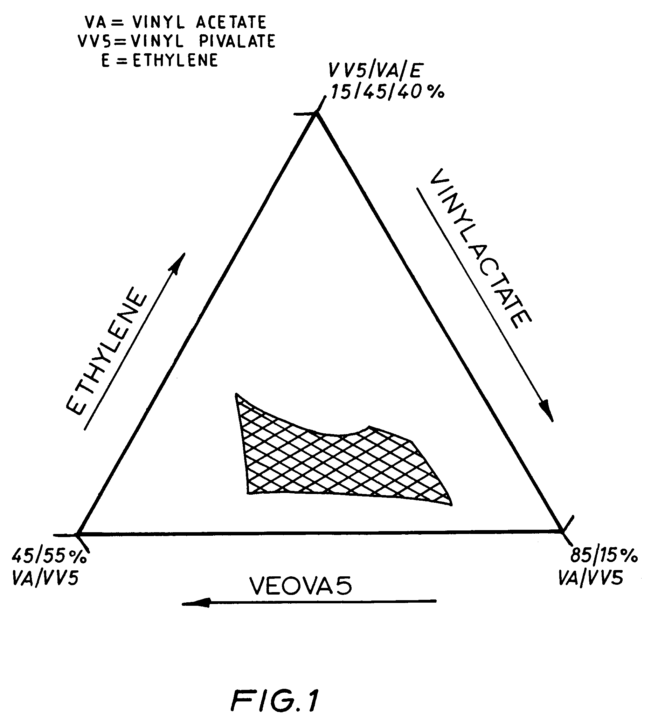

It will be appreciated that these preferred starting comonomer compositions, containing monomers (a), (b) and (c) in the specified proportions meeting the equations I to IV, are represented by the shaded area in figure 1.

It was found that the respective coefficients in the equations I, II and III and IV did not change significantly, if another stabilising comonomer was used instead of acrylic acid in the same concentration of the above specified preferred polymer compositions and/or another surfactant was used as those specified in the examples hereinafter.

Another aspect of the present invention is formed by latices containing these polymers, comprising 25-65% by weight of said latex and preferably from 40 to 50% by weight, and by paint and/or lacquer and/or varnishes comprising a latex as specified above and powders produced by drying a latex as defined above. Those paint, lacquer or varnish compositions show very attractive physical properties which make them especially suitable for modern industrial application.

Such paint or lacquer or varnish composition comprises a latex together with at least one additional constituent selected from co-solvents, pigments, thickeners, dispersants, preservatives, corrosion inhibitors and anti-foaming agents.

It will be appreciated that additional aspects of the present invention are formed by solid polymeric products formed by physical drying of a latex or a coating, comprising the above defined polymers and by redispersible latex powders formed by physical drying of said latices, and by coating compositions based on said redispersible latex powders.

Another feature of the present invention is a process for the preparation of a latex of polymer, wherein an aqueous emulsion comprising vinyl acetate, vinyl pivalate, one or more stabilisers, one or more buffering agents and one or more polymerisation initiators, is reacted with an alkylene and preferably ethylene at elevated temperature, suitably 40-100 °C.

The reaction is preferably carried out using ethylene at elevated pressure, suitably 1 to 7 MPa.

It has been found that the presence of vinyl pivalate unexpectedly and advantageously facilitates the incorporation of alkylene and in particular ethylene, without heavy foaming.

Moreover, it was found that the higher the proportion of vinyl pivalate relative to vinyl acetate, the higher the proportion of copolymerised ethylene at a given ethylene pressure.

Using said process, very high attractive monomer conversions could be reached.

Stabilisers suitably constitute 1-4% by weight, calculated relative to the total weight of the monomer constituents. Suitable stabilisers and the amount they are used in are well-known in the art and described in for instance the aforementioned European patent application No. 295,727, and in Emulsifiers and detergents, international edition, volume 1 (by Mc Cutcheon, The Manufacturing Confectioner Publishing Co.,

EP 0 518 406 B1

Glen Rock NY, USA 1990). Preferably an anionic and a non-ionic surface active agent are used. Especially preferred is the use of an alkylaryl sulphonate together with an ethoxylated nonylphenol (e.g., "Arkopol N230", a trademark).

Surprisingly it was found that colloidal stabilisers, which normally could be successfully applied for said polymerisations, could not be applied for polymerisation reactions of the present invention.

Likewise suitable free radical initiators, radical formation accelerators, buffering agents and their relative amounts are also well-known in the art and disclosed in the above cited European patent application.

The invention will now be further described with reference to the following examples and comparative examples.

## Examples of latex preparation by thermal initiation

A latex according to the invention was prepared in a 2 litre autoclave reactor equipped with a stirrer, thermometer, inlet tubes for initiator, monomers, nitrogen (not used with thermal initiation) and ethylene.

The reactor was charged with 6.0 parts by weight (pbw) of a 10% by weight aqueous solution of an alkaryl sulphonate anionic surfactant sold under the trade mark "Humifen" SF90, (containing 90% active material), 0.1 pbw potassium persulphate and 0.05 pbw borax in 33.0 pbw demineralised water.

A monomer pre-emulsion was prepared by emulsifying 95.5 pbw of a mixture of vinyl acetate and "VeoVa" 5 as specified in the subsequent table; 0.5 pbw acrylic acid (stabiliser) with a solution of 4.0 pbw of a 10% by weight aqueous solution of "Humifen" SF90; 8.0 pbw of the non-ionic surfactant "Arkopal N230"; 0.4 pbw potassium persulphate and 0.4 pbw borax in 30 pbw of demineralised water.

The initial reactor charge (IRC) was heated to 80 °C. The pre-emulsion was prepared by the addition of the monomer mixture to the agitated aqueous phase.

When the temperature of the IRC reaches 80 °C, the monomer pre-emulsion was added at such a rate that addition took about 2 hours and the required ethylene pressure was applied to the reactor.

At the end of the addition period, the temperature of the reaction mixture was maintained at 80 °C for a further 2 hours. The ethylene valve was closed directly after the addition of the monomer mixture had finished and a small stream of ethylene was allowed to escape from the reactor to minimise foaming.

At the end of a 2 hours completion of the reaction and degassing period, the latex obtained is cooled to ambient temperature. It is then filtered and the pH adjusted with ammonium carbonate solution to pH 7.0-7.5.

Approximately 1 litre of latex was thus prepared.

A series of further latices was prepared by a method as described above, involving stabilisation by acrylic acid and thermal initiation.

Ethylene pressures and vinyl acetate/"VeoVa" 5 ratios were varied.

The polymers were analysed in one or more of the following ways.

The glass transition temperature ($T_g$) was measured by differential scanning calorimetry.

Ethylene content was determined by a method involving severe (total) hydrolysis of latices of known polymer content using aqueous potassium hydroxide in 1/1 v/v ethanol/toluene (0.5 mol/litre) followed by titration of the remaining base against hydrochloric acid (0.5 mol/litre in ethanol), the ester group concentration of the polymer being calculable from the thus-derived information of the quantity of base used in the hydrolysis.

Water absorption was determined on a piece of film, formed from the latex, of 20 x 20 mm. The film was applied on polyethylene with a 200 micron applicator. The film was allowed to dry for one week at about 40 °C. The pieces are immersed in demineralised water for 2 weeks at room temperature. After this period the film is weighed. From the increase in weight the water absorption is calculated.

The monomer conversion was determined by a bromination and titration technique giving information on the free vinyl ester concentration. A sample of a latex was reacted at 0-5 °C with an excess of bromine in glacial acetic acid followed by determination of the excess bromine iodometrically with sodium thiosulphate.

The solids content was determined by drying the latex and comparing the initial weight with the final weight.

Water spot (whitening) resistance was measured after 24 hours on a film formed from the latex. The film was applied to a glass panel with a 200 micron applicator. The film was allowed to dry for one week at about 40 °C. A drop of demineralised water was placed on the film and the whitening of the film assessed after 24 hours, each time on a 0-10 scale, 10 indicating no effect and 0 indicating complete whitening, the ratings being summated.

Viscosity was measured on a Brookfield viscometer, spindle 3, 60 rpm, 23 °C.

The results are presented in Table 1 hereinafter.

4

Comparative Example A

Latices of vinyl acetate, "VeoVa" 9 and ethylene were prepared by thermal initiation in the manner above described in the first experimental description for "VeoVa" 5.

Table 2 below presents results for such latices, showing the advantageous physical properties of the corresponding polymers derived from "VeoVa" 5.

Comparative Example B

Efforts to prepare latices of vinyl acetate, "VeoVa" 5 and ethylene using colloid stabilisation did only lead to unattractive latices, as summarised in table 3.

## Formulation colloid stabilised ethylene latices

| | | | |
|---|---|---|---|
| Water phase | 70 | pbw | $H_2O$ demineralised |
| | 6 | " | Humifen SF90 10% |
| | 8 | " | Arkopal N230 25% |
| | 0.1 | " | Potassium persulphate |
| | 0.05 | " | Borax |
| | 2 | " | Hydroxyethyl cellulose ("Natrosol 250L", a trademark) |
| Initiator solution | 12 | " | $H_2O$ demineralised |
| | 0.4 | " | Potassium persulphate |
| Monomers | 100 | " | Vinyl pivalate (VeoVa 5) |
| | 100 | " | Vinyl acetate |
| | x | MPa | Ethylene |

Manufacturing procedure

The water phase is charged into the reactor and heated to 80 °C. As soon as the temperature reaches 80 °C, separate additions of the monomer mixture and the initiator solution are started and the required ethylene pressure is applied. The monomer mixture is added in 2 hours and the initiator solution in 2 hours, 15 minutes. After the initiator solution is added the temperature is held at 80 °C for another 1 hour, 45 minutes. The ethylene valve is closed directly after the addition of the monomer mixture is finished and a small stream of ethylene is allowed to escape from the reactor to minimise foaming. At the end of the digestion- and degassing period, the latex is cooled and filtered.

TABLE 1

| VA/VV5 wt ratio | Monomer stabiliser pbw on total weight of monomers | p.$C_2H_4$ MPa | surf. H/A | monomer conv.(%) | Polymer VA/VV5/E wt ratio | particle size (Nm) | $T_g$ (°C) | MFT (°C) | visc. (mPas) | water absorp. % | water spot 24 hr |
|---|---|---|---|---|---|---|---|---|---|---|---|
| 90/10* | 0.5% AA | 3 | H/A | 99.4 | 74.0/ 8.2/17.8 | 123.2 | 1.3 | 9.2 | 290 | 263 | 4 |
| 80/20 | 0.5% AA | 1 | H/A | 99.7 | 77.1/19.3/ 3.6 | 126.3 | 35.0 | 19.0 | 200 | 110 | 5 |
| 80/20 | 0.5% AA | 3 | H/A | 99.7 | 68.7/17.2/14.1 | 137.1 | 10.9 | 11.4 | 340 | 286 | 6 |
| 70/30 | 0.5% AA | 1 | H/A | 99.6 | 67.8/27.8/ 4.4 | 135.5 | 35.6 | 24.8 | 340 | 80 | 8 |
| 70/30 | 0.5% AA | 3 | H/A | 99.2 | 61.6/26.4/12.0 | 144.4 | 17.7 | 16.0 | 400 | 223 | 7 |
| 60/40 | 0.5% AA | 1 | H/A | 99.5 | 54.6/36.4/ 9.0 | 115.5 | 27.2 | 31.3 | 120 | 44 | 8 |
| 60/40 | 0.5% AA | 3 | H/A | 99.5 | 50.6/33.8/15.6 | 141.5 | 12.0 | 19.5 | 260 | 135 | 7 |

E   - Ethylene, MFT - Minimum Film forming Temperature

AA  - Acrylic Acid, H - "Humifen SF90", A - "Arkopal N230"

VA  - Vinyl Acetate

VV5 - VeoVa 5 (SHELL trade mark for vinyl pivalate)

*   comparative example (less than 15% VeoVa 5)

EP 0 518 406 B1

## TABLE 2

| VA/VV9 * wt ratio | Monomer stabiliser pbw on total weight of monomers | p.$C_2H_4$ MPa | surf. | monomer conv.(%) | Polymer VA/VV9/E wt ratio | particle size (Nm) | $T_g$ (°C) | MFT (°C) | visc. (mPas) | water absorp. % | water spot 24 hr |
|---|---|---|---|---|---|---|---|---|---|---|---|
| 70/30 | 0.5% AA | 1 | H/A | 99.1 | 69.3/29.7/ 1 | 142.8 | 17 | 12 | 640 | 291 | 4 |
| 80/20 | 0.5% AA | 3 | H/A | 99.1 | 72.3/18.1/ 9.6 | 142.9 | 12 | 8 | 800 | 390 | 4 |
| 70/30 | 0.5% AA | 3 | H/A | 98.9 | 60.9/26.1/13 | 133.9 | 6 | 4 | 960 | 251 | 5 |
| 60/40 | 0.5% AA | 3 | H/A | 99.1 | 53.0/35.5/11.5 | 119.1 | 10 | 12 | 1160 | 287 | 4 |
| VA/VV5 | | | | | VA/VV5/E | | | | | | |
| 70/30 | 0.5% AA | 1 | H/A | 99.6 | 67.8/27.8/ 4.4 | 135.5 | 35.6 | 24.8 | 340 | 80 | 8 |
| 80/20 | 0.5% AA | 3 | H/A | 99.7 | 68.7/17.2/14.1 | 137.1 | 10.9 | 11.4 | 340 | 286 | 6 |
| 70/30 | 0.5% AA | 3 | H/A | 99.2 | 61.6/26.4/12.0 | 144.4 | 17.7 | 16.0 | 400 | 223 | 7 |
| 60/40 | 0.5% AA | 3 | H/A | 99.8 | 54.6/36.4/ 9.0 | 111.5 | 27.2 | 31.3 | 120 | 44 | 8 |

VV9 = VeoVa 9, a SHELL trade mark for vinyl esters of branched carboxylic acids, containing 9 carbon atoms in the acid moiety.

* comparative example

EP 0 518 406 B1

## TABLE 3

The emulsions obtained after the polymerisation could only with difficulty be degassed and unacceptable amounts of foam were produced.

|  | HEC<br>VV5/VA/bar E<br>30/70/12 | PVA<br>VV5/VA/bar E<br>30/70/30 |
|---|---|---|
| Analysis |  |  |
| % ethylene | 3.9 | 10.2 |
| % vinyl pivalate | 28.1 | 27.6 |
| % vinyl acetate | 68.0 | 62.2 |
| Conversion | 96.2 | 97.1 |
| SC | 43.5 | 46.1 |
| MFT | 16 | 9 |
| $T_g$ | 22 | 12 |
| water absorption | 250 | 310 |
| alkali resistance | 15 | 2 |
| water spot 24 hr | 6 | 6 |

HEC - hydroxyethylcellulose

PVA - polyvinylalcohol

## Claims

Claims for the following Contracting States : BE, CH, LI, DE, FR, IT, NL, SE, GB

1. Polymers obtainable by polymerisation of a comonomer mixture, comprising:
   (a) alkylene, preferably ethylene,
   (b) vinyl acetate,
   (c) vinyl pivalate, the glass transition temperature of whose homopolymer, as measured by differential scanning calorimetry, being in the range of from 70-80 °C, preferably from 70 to 75 °C, and
   (d) a stabilising monomer, selected from the group consisting of acrylic acid, methacrylic acid, acrylamide, methacrylamide, diacetone acrylamide and sodium vinyl sulphonate or mixtures thereof, of which acrylic acid or methacrylic acid are preferred, in an amount of from 0.5 to 5% by weight relative to the total weight of monomers, characterised by the respective weight percentages $x_1$, $x_2$ and $x_3$ of the components (a), (b) and (c), being calculated relative to the total weight of the sum of the amounts of these components being in the ranges:
   $x_1$ is in the range of from 1 to 41% by weight;
   $x_2$ is in the range of from 44 to 84% by weight; and
   $x_3$ is in the range of from 15 to 55% by weight.

2. Polymers according to claim 1, characterised in that the respective weight percentages $x_1$, $x_2$ and $x_3$ of components (a), (b) and (c), being calculated relative to the total weight of the sum of the amounts of these components, are simultaneously fulfilling the following equations each describing compositions having equal performance contour lines in a triangle diagram:

$$T_g = - 14.608x_1 + 40.557x_2 + 43.960x_3 - 52.011x_1.x_2 - 58.558x_1.x_3 + 30.802x_2.x_3 \qquad \text{I}$$
$$WA = + 810.34x_1 + 118.49x_2 - 54.07x_3 + 331.64x_1.x_2 - 516.62x_1.x_3 - 85.08x_2.x_3 \qquad \text{II}$$
$$CONV = + 98.94x_1 + 100.11x_2 + 101.08x_3 + 0.05x_1.x_2 - 3.25x_1.x_3 - 3.69x_2.x_3 \qquad \text{III}$$
$$WS = + 4.462x_1 + 0.989x_2 + 2.780x_3 + 8.163x_1.x_2 + 10.113x_1.x_3 + 7.238x_2.x_3, \qquad \text{IV}$$

wherein $T_g$ represents the glass transition temperature and has a value in the range of from 10 to 40 °C, wherein WA represents the water absorption and has a value of at most 150 as measured as specified above, wherein CONV represents the conversion at the conditions of the examples and has a value of at least 99.2%, and wherein WS represents the water spot resistance and has a value of at least 7, and wherein the stabilising monomer is acrylic acid in a concentration of 0.5% by weight.

3. A latex containing as polymeric constituent 25-65% by weight of a polymer according to any one of claims 1 or 2.

4. Coating compositions comprising a latex according to claim 3 and at least one pigment.

5. A solid polymeric product formed by physical drying of a latex according to claim 3.

6. A process for the preparation of latices of polymers according to claim 3, wherein an aqueous emulsion comprising vinyl acetate, the vinyl pivalate, one or more stabilisers, one or more buffering agents and one or more polymerisation initiators, is reacted with alkylene and preferably ethylene at elevated temperature, suitably 40-100 °C.

7. Process according to claim 6, characterised in that ethylene is present at a pressure of from 1 to 7 MPa (10 to 70 bar).

8. Process according to any one of claims 6 or 7, characterised in that the stabilisers comprise at least one anionic surface active agent or at least one surface active agent of the mixed anionic/non-ionic type.

**Claims for the following Contracting State : ES**

1. A process for the preparation of a polymer by polymerisation of a comonomer mixture, comprising:
(a) alkylene, preferably ethylene,
(b) vinyl acetate,
(c) vinyl pivalate, the glass transition temperature of whose homopolymer, as measured by differential scanning calorimetry, being in the range of from 70-80 °C, preferably from 70 to 75 °C, and
(d) a stabilising monomer, selected from the group consisting of acrylic acid, methacrylic acid, acrylamide, methacrylamide, diacetone acrylamide and sodium vinyl sulphonate or mixtures thereof, of which acrylic acid or methacrylic acid are preferred, in an amount of from 0.5 to 5% by weight relative to the total weight of monomers, characterised by the respective weight percentages $x_1$, $x_2$ and $x_3$ of the components (a), (b) and (c), being calculated relative to the total weight of the sum of the amounts of these components being in the ranges:
$x_1$ is in the range of from 1 to 41% by weight;
$x_2$ is in the range of from 44 to 84% by weight; and
$x_3$ is in the range of from 15 to 55% by weight.

2. A process according to claim 1, characterised in that the respective weight percentages $x_1$, $x_2$ and $x_3$ of components (a), (b) and (c), being calculated relative to the total weight of the sum of the amounts of these components, are simultaneously fulfilling the following equations each describing compositions having equal performance contour lines in a triangle diagram:

$$T_g = -14.608x_1 + 40.557x_2 + 43.960x_3 - 52.011x_1.x_2 - 58.558x_1.x_3 + 30.802x_2.x_3 \qquad \text{I}$$
$$WA = +810.34x_1 + 118.49x_2 - 54.07x_3 + 331.64x_1.x_2 - 516.62x_1.x_3 - 85.08x_2.x_3 \qquad \text{II}$$
$$CONV = +98.94x_1 + 100.11x_2 + 101.08x_3 + 0.05x_1.x_2 - 3.25x_1.x_3 - 3.69x_2.x_3 \qquad \text{III}$$
$$WS = +4.462x_1 + 0.989x_2 + 2.780x_3 + 8.163x_1.x_2 + 10.113x_1.x_3 + 7.238x_2.x_3, \qquad \text{IV}$$

wherein $T_g$ represents the glass transition temperature and has a value in the range of from 10 to 40 °C, wherein WA represents the water absorption and has a value of at most 150 as measured as specified above, wherein CONV represents the conversion at the conditions of the examples and has a value of at least 99.2%, and wherein WS represents the water spot resistance and has a value of at least 7, and wherein the stabilising monomer is acrylic acid in a concentration of 0.5% by weight.

3. A process for the preparation of a latex containing as polymeric constituent 25-65% by weight of a polymer prepared according to process of claims 1 or 2.

4. A process for the preparation of a coating composition comprising a latex prepared according to the process of claim 3 and at least one pigment.

5. A process for the preparation of a solid polymeric product by physical drying of a latex prepared according to the process of claim 3.

6. A process for the preparation of latices of polymers wherein an aqueous emulsion comprising vinyl acetate, the vinyl pivalate, one or more stabilisers, one or more buffering agents and one or more polymerisation initiators, is reacted with alkylene and preferably ethylene at elevated temperature, suitably 40-100 °C.

7. A process according to claim 6, characterised in that ethylene is present at a pressure of from 1 to 7 MPa (10 to 70 bar).

8. A process according to any one of claims 6 or 7, characterised in that the stabilisers comprise at least one anionic surface active agent or at least one surface active agent of the mixed anionic/non-ionic type.

**Patentansprüche**
**Patentansprüche für folgende Vertragsstaaten : BE, CH, LI, DE, FR, IT, NL, SE, GB**

1. Polymerisate, die durch Polymerisation eines Comonomergewischs aus
   (a) Alkylen, bevorzugt Ethylen,
   (b) Vinylacetat,
   (c) Vinylpivalat, wobei die mittels Differentialscanningkalorimetrie gemessene Glasübergangstemperatur dessen Homopolymers im Bereich von 70-80 °C, bevorzugt von 70 bis 75 °C liegt, sowie
   (d) einem stabilisierenden Monomer aus der Reihe Acrylsäure, Methacrylsäure, Acrylamid, Methacrylamid, Diacetonacrylamid und Natriumvinylsulfonat oder Mischungen aus denselben, wobei Acrylsäure oder Methacrylsäure bevorzugt werden, in einer Menge von 0,5 bis 5 Gew.-%, bezogen auf das Gesamtgewicht an Monomeren, erhalten werden können, dadurch gekennzeichnet, daß die jeweiligen Gewichtsprozentsätze $x_1$, $x_2$ und $x_3$ der Komponenten (a), (b) und (c), auf das Gesamtgewicht der Summe der Mengen dieser Bestandteile bezogen berechnet, in den folgenden Bereichen liegen:
   $x_1$ liegt im Bereich von 1 bis 41 Gew.-%;
   $x_2$ liegt im Bereich von 44 bis 84 Gew.-%; und
   $x_3$ liegt im Bereich von 15 bis 55 Gew.-%.

2. Polymerisate nach Anspruch 1, dadurch gekennzeichnet, daß die jeweiligen Gewichtsprozentsätze $x_1$, $x_2$ und $x_3$ der Komponenten (a), (b) und (c), auf das Gesamtgewicht der Summe der Mengen dieser Bestandteile bezogen berechnet, gleichzeitig den folgenden Gleichungen genügen, die jeweils Zusammensetzungen mit Linien gleichen Verhaltens in einem Dreiecksdiagramm beschreiben:

$$T_g = -14{,}608x_1 + 40{,}557x_2 + 43{,}960x_3 - 52{,}011x_1 \bullet x_2 - 58{,}558x_1 \bullet x_3 + 30{,}802x_2 \bullet x_3 \qquad \text{I}$$
$$WA = +810{,}34x_1 + 118{,}49x_2 - 54{,}07x_3 + 331{,}64x_1 \bullet x_2 - 516{,}62x_1 \bullet x_3 - 85{,}08x_2 \bullet x_3 \qquad \text{II}$$

$$UMW = + 98,94x_1 + 100,11x_2 + 101,08x_3 + 0,05x_1 \cdot x_2 - 3,25x_1 \cdot x_3 - 3,69x_2 \cdot x_3 \qquad III$$
$$WF = + 4,462x_1 + 0,989x_2 + 2,780x_3 + 8,163x_1 \cdot x_2 + 10,113x_1 \cdot x_3 + 7,238x_2 \cdot x_3, \qquad IV$$

in denen $T_g$ die Glasübergangstemperatur bedeutet und bei einem Wert im Bereich von 10 bis 40°C liegt, in denen WA die Wasserabsorption darstellt und bei einem wie oben angegeben gemessenen Wert von höchstens 150 liegt, in denen UMW die Umwandlung unter den Bedingungen der Beispiele bedeutet und einen Wert von mindestens 99,2% hat, und in denen WF die Wasserfleckbeständigkeit bedeutet und einen Wert von mindestens 7 aufweist, wobei es sich bei dem stabilisierenden Monomer um Acrylsäure mit einer Konzentration von 0,5 Gew.-% handelt.

3. Latex, welcher als polymeren Bestandteil 25-65 Gew.-% eines Polymerisats nach einem der Ansprüche 1 oder 2 enthält.

4. Beschichtungszusammensetzungen, die einen Latex nach Anspruch 3 und mindestens ein Pigment enthalten.

5. Festes polymeres Produkt, das durch physikalisches Trocknen eines Latex nach Anspruch 3 gebildet wird.

6. Verfahren zur Herstellung von Latizes aus Polymerisaten nach Anspruch 3, wobei eine Vinylacetat, das Vinylpivalat, mindestens einen Stabilisator, mindestens ein Puffermittel und mindestens einen Polymerisationsinitiator enthaltende wäßrige Emulsion mit Alkylen, vorzugsweise Ethylen, bei erhöhter Temperatur, zweckmäßig 40-100°C, umgesetzt wird.

7. Verfahren nach Anspruch 6, dadurch gekennzeichnet, daß Ethylen unter einem Druck von 1 bis 7 MPa (10 bis 70 bar) vorliegt.

8. Verfahren nach einem der Ansprüche 6 oder 7, dadurch gekennzeichnet, daß die Stabilisatoren mindestens ein anionisches oberflächenaktives Mittel oder mindestens ein oberflächenaktives Mittel des gemischten anionischen /nichtionischen Typs enthalten.

**Patentansprüche für folgenden Vertragsstaat : ES**

1. Verfahren zur Herstellung eines Polymerisats durch Polymerisation eines Comonomergemischs aus:
   (a) Alkylen, bevorzugt Ethylen,
   (b) Vinylacetat,
   (c) Vinylpivalat, wobei die mittels Differentialscanningkalorimetrie gemessene Glasübergangstemperatur dessen Homopolymers im Bereich von 70-80°C, bevorzugt von 70 bis 75°C liegt, sowie
   (d) einem stabilisierenden Monomer aus der Reihe Acrylsäure, Methacrylsäure, Acrylamid, Methacrylamid, Diacetonacrylamid und Natriumvinylsulfonat oder Mischungen aus denselben, wobei Acrylsäure oder Methacrylsäure bevorzugt werden, in einer Menge von 0,5 bis 5 Gew.-%, bezogen auf das Gesamtgewicht an Monomeren, dadurch gekennzeichnet, daß die jeweiligen Gewichtsprozentsätze $x_1$, $x_2$ und $x_3$ der Komponenten (a), (b) und (c), auf das Gesamtgewicht der Summe der Mengen dieser Bestandteile bezogen berechnet, in den folgenden Bereichen liegen:
   $x_1$ liegt im Bereich von 1 bis 41 Gew.-%;
   $x_2$ liegt im Bereich von 44 bis 84 Gew.-%; und
   $x_3$ liegt im Bereich von 15 bis 55 Gew.-%.

2. Verfahren nach Anspruch 1, dadurch gekennzeichnet, daß die jeweiligen Gewichtsprozentsätze $x_1$, $x_2$ und $x_3$ der Komponenten (a), (b) und (c), auf das Gesamtgewicht der Summe der Mengen dieser Bestandteile bezogen berechnet, gleichzeitig den folgenden Gleichungen genügen, die jeweils Zusammensetzungen mit Linien gleichen Verhaltens in einem Dreiecksdiagramm beschreiben:

$$T_g = - 14,608x_1 + 40,557x_2 + 43,960x_3 - 52,011x_1 \cdot x_2 - 58,558x_1 \cdot x_3 + 30,802x_2 \cdot x_3 \qquad I$$
$$WA = + 810,34x_1 + 118,49x_2 - 54,07x_3 + 331,64x_1 \cdot x_2 - 516,62x_1 \cdot x_3 - 85,08x_2 \cdot x_3 \qquad II$$
$$UMW = + 98,94x_1 + 100,11x_2 + 101,08x_3 + 0,05x_1 \cdot x_2 - 3,25x_1 \cdot x_3 - 3,69x_2 \cdot x_3 \qquad III$$
$$WF = + 4,462x_1 + 0,989x_2 + 2,780x_3 + 8,163x_1 \cdot x_2 + 10,113x_1 \cdot x_3 + 7,238x_2 \cdot x_3, \qquad IV$$

in denen $T_g$ die Glasübergangstemperatur bedeutet und bei einem Wert im Bereich von 10 bis 40°C liegt, in denen WA die Wasserabsorption darstellt und wie oben angegeben bei einem gemessenen Wert von höchstens 150 liegt, in denen UMW die Umwandlung unter den Bedingungen der Beispiele bedeutet und einen Wert von mindestens 99,2% hat, und in denen WF die Wasserfleckbeständigkeit bedeutet und einen Wert von mindestens 7 aufweist, wobei es sich bei dem stabilisierenden Monomer um Acrylsäure mit einer Konzentration von 0,5 Gew.-% handelt.

3. Verfahren zur Herstellung eines Latex, welcher als polymeren Bestandteil 25-65 Gew.-% eines gemäß dem Verfahren nach einem der Ansprüche 1 oder 2 hergestellten Polymerisats enthält.

4. Verfahren zur Herstellung einer Beschichtungszusammensetzung, die einen gemäß dem Verfahren nach Anspruch 3 hergestellten Latex und mindestens ein Pigment enthält.

5. Verfahren zur Herstellung eines festen polymeren Produktes durch physikalische Trocknung eines gemäß dem Verfahren nach Anspruch 3 hergestellten Latex.

6. Verfahren zur Herstellung von Latizes aus Polymerisaten, wobei eine Vinylacetat, das Vinylpivalat, mindestens einen Stabilisator, mindestens ein Puffermittel und mindestens einen Polymerisationsinitiator enthaltende wäßrige Emulsion mit Alkylen, vorzugsweise Ethylen, bei erhöhter Temperatur, zweckmäßig 40-100°C, umgesetzt wird.

7. Verfahren nach Anspruch 6, dadurch gekennzeichnet, daß Ethylen unter einem Druck von 1 bis 7 MPa (10 bis 70 bar) vorliegt.

8. Verfahren nach einem der Ansprüche 6 oder 7, dadurch gekennzeichnet, daß die Stabilisatoren mindestens ein anionisches oberflächenaktives Mittel oder mindestens ein oberflächenaktives Mittel des gemischten anionischen/nichtionischen Typs enthalten.

**Revendications**
**Revendications pour les Etats contractants suivants : BE, CH, LI, DE, FR, IT, NL, SE, GB**

1. Polymères que l'on peut obtenir par polymérisation d'un mélange de comonomères, comprenant:
   (a) de l'alkylène, de préférence de l'éthylène;
   (b) de l'acétate de vinyle;
   (c) du pivalate de vinyle, dont la température de transition vitreuse de l'homopolymère, mesurée par calorimétrie différentielle à balayage, est comprise entre 70 et 80°C, de préférence entre 70 et 75°C; et
   (d) un monomère stabilisant choisi dans le groupe formé par l'acide acrylique, l'acide méthacrylique, l'acrylamide, le méthacrylamide, l'acrylamidediacétone et le vinylsulfonate de sodium ou leurs mélanges, dont on préfère l'acide acrylique ou l'acide méthacrylique, à raison de 0,5 à 5% en poids par rapport au poids total des monomères, caractérisé en ce que les pourcentages en poids respectifs $x_1$, $x_2$ et $x_3$ des composants (a), (b) et (c), calculés par rapport au poids total de la somme des quantités de ces composants, sont dans les gammes:
   $x_1$ est compris entre 1 et 41% en poids;
   $x_2$ est compris encre 44 et 84% en poids; et
   $x_3$ est compris entre 15 et 55% en poids.

2. Polymères selon la revendication 1, caractérisés en ce que les pourcentages en poids respectifs $x_1$, $x_2$ et $x_3$ des composants (a), (b) et (c), calculés par rapport au poids total de la somme des quantités de ces composants, satisfont simultanément les équations suivantes, chacune décrivant des compositions ayant des lignes de contour à performance égale dans un diagramme ternaire :

$$T_g = -14{,}608x_1 + 40{,}557x_2 + 43{,}960x_3 - 52{,}011x_1 \cdot x_2 - 58{,}558x_1 \cdot x_3 + 30{,}802x_2 \cdot x_3 \qquad \text{I}$$
$$WA = +810{,}34x_1 + 118{,}49x_2 - 54{,}07x_3 + 331{,}64x_1 \cdot x_2 - 516{,}62x_1 \cdot x_3 - 85{,}08x_2 \cdot x_3 \qquad \text{II}$$
$$CONV = +98{,}94x_1 + 100{,}11x_2 + 101{,}08x_3 + 0{,}05x_1 \cdot x_2 - 3{,}25x_1 \cdot x_3 - 3{,}69x_2 \cdot x_3 \qquad \text{III}$$
$$WS = +4{,}462x_1 + 0{,}989x_2 + 2{,}780x_3 + 8{,}163x_1 \cdot x_2 + 10{,}113x_1 \cdot x_3 + 7{,}238x_2 \cdot x_3 \qquad \text{IV}$$

dans lesquelles $T_g$ représente la température de transition vitreuse et possède une valeur comprise entre 10 et 40°C, dans lesquelles WA représente l'absorption d'eau et possède une valeur d'au plus 150%, mesurée comme spécifiée ci-dessus, dans lesquelles CONV représente le taux de conversion des monomères dans les conditions des exemples et possède une valeur d'au moins 99,2%, et dans lesquelles WS représente la résistance aux taches d'eau et possède une valeur d'au moins 7 et dans lesquelles le monomère stabilisant est l'acide acrylique en une concentration de 0,5% en poids.

3. Latex contenant en tant que constituant polymère 25 à 65% en poids d'un polymère selon l'une quelconque des revendications 1 ou 2.

4. Compositions de revêtement comprenant un latex selon la revendication 3 et au moins un pigment.

5. Produit polymère solide formé par séchage physique d'un latex selon la revendication 3.

6. Procédé pour la préparation de latex de polymères selon la revendication 3, dans lequel une émulsion aqueuse comprenant de l'acétate de vinyle, du pivalate de vinyle, un ou plusieurs stabilisants, un ou plusieurs agents tampon et un ou plusieurs amorceurs de polymérisation, est mise à réagir avec un alkylène et de préférence l'éthylène à température élevée, de façon appropriée 40 à 100°C.

7. Procédé selon la revendication 6, caractérisé en ce que l'éthylène est présent sous une pression de 1 à 7 MPa (10 à 70 bars).

8. Procédé selon l'une quelconque des revendications 6 ou 7, caractérisé en ce que les stabilisants comprennent au moins un tensio-actif anionique ou au moins un tensio-actif du type anionique/non ionique mélangé.

**Revendications pour l'Etat contractant suivant : ES**

1. Procédé de préparation d'un polymère par polymérisation d'un mélange de comonomères, comprenant:
   (a) de l'alkylène, de préférence de l'éthylène;
   (b) de l'acétate de vinyle;
   (c) du pivalate de vinyle, dont la température de transition vitreuse de l'homopolymère, mesurée par calorimétrie différentielle à balayage, est comprise entre 70 et 80°C, de préférence entre 70 et 75°C; et
   (d) un monomère stabilisant choisi dans le groupe formé par l'acide acrylique, l'acide méthacrylique, l'acrylamide, le méthacrylamide, l'acrylamidediacétone et le vinylsulfonate de sodium ou leurs mélanges, dont on préfère l'acide acrylique ou l'acide méthacrylique, à raison de 0,5 à 5% en poids par rapport au poids total des monomères, caractérisé en ce que les pourcentages en poids respectifs $x_1$, $x_2$ et $x_3$ des composants (a), (b) et (c), calculés par rapport au poids total de la somme des quantités de ces composants, sont dans les gammes:
   $x_1$ est compris entre 1 et 41% en poids;
   $x_2$ est compris entre 44 et 84% en poids; et
   $x_3$ est compris entre 15 et 55% en poids.

2. Procédé selon la revendication 1, caractérisé en ce que les pourcentages en poids respectifs $x_1$, $x_2$ et $x_3$ des composants (a), (b) et (c), calculés par rapport au poids total de la somme des quantités de ces composants, satisfont simultanément les équations suivantes, chacune décrivant des compositions ayant des lignes de contour à performance égale dans un diagramme ternaire:

$$T_g = -14{,}608x_1 + 40{,}557x_2 + 43{,}960x_3 - 52{,}011x_1 \cdot x_2 - 58{,}558x_1 \cdot x_3 + 30{,}802x_2 \cdot x_3 \qquad \text{I}$$
$$WA = +810{,}34x_1 + 118{,}49x_2 - 54{,}07x_3 + 331{,}64x_1 \cdot x_2 - 516{,}62x_1 \cdot x_3 - 85{,}08x_2 \cdot x_3 \qquad \text{II}$$
$$CONV = +98{,}94x_1 + 100{,}11x_2 + 101{,}08x_3 + 0{,}05x_1 \cdot x_2 - 3{,}25x_1 \cdot x_3 - 3{,}69x_2 \cdot x_3 \qquad \text{III}$$
$$WS = +4{,}462x_1 + 0{,}989x_2 + 2{,}780x_3 + 8{,}163x_1 \cdot x_2 + 10{,}113x_1 \cdot x_3 + 7{,}238x_2 \cdot x_3 \qquad \text{IV}$$

dans lesquelles $T_g$ représente la température de transition vitreuse et possède une valeur comprise entre 10 et 40°C, dans lesquelles WA représente l'absorption d'eau et possède une valeur d'au plus 150, mesurée comme spécifiée ci-dessus, dans lesquelles CONV représente le taux de conversion des monomères dans les conditions des exemples et possède une valeur d'au moins 99,2%, et dans lesquelles WS représente la résistance aux taches d'eau et possède une valeur d'au moins 7 et dans lesquelles le monomère stabilisant est l'acide acrylique en une concentration de 0,5% en poids.

3. Procédé de préparation d'un latex contenant en tant que constituant polymère 25 à 65% en poids d'un polymère préparé selon le procédé conforme à l'une quelconque des revendications 1 ou 2.

4. Procédé de préparation d'une composition de revêtement comprenant un latex préparé selon le procédé conforme à la revendication 3 et au moins un pigment.

5. Procédé de préparation d'un produit polymère solide formé par séchage physique d'un latex préparé selon le procédé conforme à la revendication 3.

6. Procédé pour la préparation de latex de polymères, dans lequel une émulsion aqueuse comprenant de l'acétate de vinyle, du pivalate de vinyle, un ou plusieurs stabilisants, un ou plusieurs agents tampon et un ou plusieurs amorceurs dc polymérisation, est mise à réagir avec un alkylène et de préférence l'éthylène à température élevée, de façon appropriée 40 à 100°C.

7. Procédé selon la revendication 6, caractérisé en ce que l'éthylène est présent sous une piession de 1 à 7 MPa (10 à 70 bars).

8. Procédé selon l'une quelconque des revendications 6 ou 7, caractérisé en ce que les stabilisants comprennent au moins un tensio-actif anionique ou au moins un tensio-actif du type anionique/non ionique mélangé.

FIG.1